# FASCICULE DE BREVET EUROPEEN

(11) **EP 2 397 402 B1**
(45) Date de publication et mention de la délivrance du brevet: **29.07.2015**
(21) Numéro de dépôt: 11170486.2
(22) Date de dépôt: 20.06.2011
(51) Int. Cl.: B64C 1/08, B29D 99/00, B29L 31/30

(54) **Panneau structural à raidissement intégré**
Strukturpanel mit integraler Versteifung
Structural Panel with integrated reinforcement

(30) Priorité: 18.06.2010 FR 1054861; 02.07.2010 FR 1055402
(43) Date de publication de la demande: 21.12.2011
(73) Titulaire: AIRBUS OPERATIONS (S.A.S), 31060 Toulouse (FR)
(72) Inventeur: Meyer, Cédric, 31470 FONSORBES (FR); Gaudin, Jocelyn, 31500 TOULOUSE (FR)
(74) Mandataire: Gicquel, Olivier Yves Gérard

(56) Documents cités:
- DE-A1- 1 921 798
- US-A- 4 086 378
- US-A- 5 871 117
- US-A1- 2009 277 994

## Description

L'invention appartient au domaine des panneaux structuraux, plus particulièrement, mais pas exclusivement, au domaine des panneaux de fuselage d'aéronef. L'invention est plus particulièrement destinée au domaine des panneaux structuraux constitués d'un matériau composite à renfort fibreux.

Le fuselage d'un aéronef est constitué principalement de panneaux raidis assemblés afin de constituer ledit fuselage. De tels panneaux couvrent chacun une surface de fuselage de quelques m² et comporte au moins une courbure correspondant au rayon de fuselage. Sur un avion, les panneaux situés en partie avant (cockpit) et en partie arrière du fuselage comportent généralement deux courbures éventuellement évolutives. Les rayons de courbures sont de quelques mètres dans le sens transversal du fuselage à quelques dizaines de mètres dans le sens longitudinal.

De tels panneaux sont constitués d'une peau, dont l'épaisseur est inférieure à 1/100^{ème} de la plus grande dimension du panneau, laquelle peau est raidie par des raidisseurs longitudinaux, dits lisses, s'étendant sensiblement parallèlement à l'axe longitudinal du fuselage, soit selon la plus faible courbure du panneau, et des raidisseurs radiaux, dits cadres, placés dans des plans perpendiculaires à l'axe longitudinal de l'aéronef.

En conséquence le raidissement du panneau est réalisé selon ces deux directions privilégiées, axe longitudinal de l'aéronef et plan perpendiculaire à cet axe, la structure de raidissement décrivant alors un ensemble de rectangles curvilignes, ou maille. Similairement, tous les autres composants de la structure suivent ce mode raidissement.

Celui-ci est avantageux en termes de fabrication, particulièrement lorsque ces panneaux sont constitués de matériaux métalliques, car il permet de fabriquer de manière séparée les raidisseurs et la peau, puis d'assembler les deux, en minimisant ainsi les chutes et les usinages. Selon ce mode de raidissement, les raidisseurs suivent à la surface du panneau une courbe géodésique entre leurs deux extrémités, ce qui permet de les fabriquer facilement à partir de profilés rectilignes. En effet, de façon imagée, une courbe géodésique de surface, correspond à la trajectoire d'un observateur se déplaçant sur ladite surface en marchant droit devant lui. Une telle trajectoire, qui correspond à une ligne droite sur un plan, est dite à courbure géodésique nulle. Ainsi, dans le cas d'une surface cylindrique, une trajectoire suivant une circonférence, une trajectoire suivant une génératrice ou une trajectoire hélicoïdale à pas constant sur cette surface sont des trajectoires à courbure géodésique nulle.

Dans le cas d'un panneau constitué d'un matériau composite à renfort fibreux, les raidisseurs sont, selon l'état de l'art, également placés selon des géodésiques sur le panneau. Ceci permet, là aussi, de fabriquer séparément les raidisseurs et la peau puis de les assembler facilement par cocuisson ou par collage.

Cependant, les efforts auxquels sont soumis ces panneaux en service ne suivent pas ces directions privilégiées des raidisseurs. Au niveau d'une maille, le concepteur ne peut adapter que l'épaisseur de la peau ou modifier les sections des raidisseurs mal orientés par rapport à l'effort observé. Il est donc fréquent de constater localement un raidissement supérieur au juste besoin, donc une masse structurale nettement supérieure à l'optimum théorique. Cette situation est particulièrement défavorable dans les zones sollicitées en cisaillement telles que les panneaux latéraux de fuselage ou les panneaux intrados et extrados de voilure.

Le document DE 1 921 798 décrit une portion de fuselage d'aéronef obtenue par enroulement filamentaire et comprenant des raidisseurs selon des directions hélicoïdales de pas constant.

Le document US 4 086 378 décrit un panneau de fuselage pour aéronef comportant un système de renfort comprenant des raidisseurs formant à la surface dudit panneau des triangles curvilignes équilatéraux, ce qui n'est mathématiquement possible que si la trace desdits raidisseurs suit une « géodésique » de la surface dudit panneau de fuselage, c'est-à-dire une courbe de courbure géodésique nulle.

Le document US 5 871 117, qui divulgue les caractéristiques de la préambule de la revendication 1, décrit une structure tubulaire, telle qu'un tronçon du fuselage d'un aéronef, comportant une peau renforcée par des raidisseurs. Lesdits raidisseurs suivent à la surface de la peau soit des traces circonférentielles, soit des traces parallèles à l'axe de révolution du tube soit encore des traces héliocoïdales à pas constant.

Afin de résoudre les insuffisances de l'art antérieur, l'invention propose un panneau raidi tel que défini par les caractéristiques de la revendication 1, comprenant au moins un raidisseur, dit longitudinal, s'étendant sensiblement d'une extrémité à l'autre du panneau et dont la trace suit sur la surface dudit panneau une trajectoire à courbure géodésique non nulle entre les deux extrémités dudit raidisseur.

La trace du raidisseur à la surface du panneau étant à courbure géodésique non nulle, celle-ci ne suit pas une direction géodésique de la surface, contrairement à l'art antérieur.

Ainsi, la direction du raidisseur peut être optimisée selon d'autres critères que la facilité de fabrication. Ce type de panneau est particulièrement avantageux lorsqu'il s'agit d'un panneau courbe et plus particulièrement en double courbure dont au moins une des courbures est non nulle.

Ledit panneau peut comporter un raidisseur longitudinal sur l'une de ses faces ou sur les deux.

Un tel panneau peut être fabriqué par l'usinage dans une tôle épaisse initialement mise en forme, les parties hors raidisseurs étant réduites en copeaux de sorte à amener leur épaisseur à l'épaisseur de peau. Toutefois un tel panneau sera avantageusement constitué d'un matériau composite à renfort fibreux. Cette constitution donne accès à d'autres procédés de fabrication dudit raidisseur, lesquels permettent de fabriquer celui-ci de manière économique, par ajout de matière, en venant renforcer localement le panneau de sorte à constituer le raidisseur qui est alors intégré au panneau, et non rapporté comme selon l'art antérieur. Ce principe constructif permet un chemin multiple d'effort par opposition au raidisseur rapporté pour lequel l'interface peau - raidisseur constitue un point faible qui doit fréquemment être renforcé par des fixations.

Selon un mode de réalisation particulier les raidisseurs sont formés par la superposition locale de plis. Cette superposition peut être réalisée par le recouvrement de bords de plis prédécoupés lors du drapage du panneau ou par la dépose locale de plis supplémentaires. Ces deux techniques peuvent même être combinées en intercalant des renforts entre les recouvrements. Dans tous les cas, on utilise avantageusement les capacités des machines de drapage ou de placement de fibres à commande numérique pour fabriquer ces panneaux de manière économique. Par ailleurs, ce mode de réalisation évite tout risque de décollement du raidisseur.

Avantageusement, le panneau comprend, en outre, un pli continu sur sa face interne et un pli continu sur sa face externe. La présence de ces plis continus évite les risques d'arrachement des raidisseurs par pelage et favorise le drainage des efforts dans tout le volume du panneau.

Selon ce mode de réalisation, le raidisseur est avantageusement constitué par recouvrement des bords de plis lors du drapage avec au moins un pli intercalaire entre les bords en recouvrement. Ces plis intercalaires permettent d'augmenter la hauteur, donc l'inertie des raidisseurs.

Avantageusement, la trace du raidisseur longitudinal sur la surface du panneau suit une trajectoire apte à procurer un maximum de raidissement vis-à-vis des sollicitations auxquelles est soumis le panneau en service.

On définit la trace du raidisseur sur la surface du panneau par la projection de la courbe reliant les centres d'inertie des sections du raidisseur sur ladite surface parallèlement au plan rectifiant local de ladite courbe.

Ainsi, le raidissement local est optimisé en regard du flux d'effort auquel est soumis le panneau. Le raidissement s'approche en tout point du juste nécessaire ce qui permet de réduire la masse du panneau à résistance et rigidité équivalentes.

L'invention sera maintenant plus précisément décrite dans le cadre de modes de réalisation préférés, nullement limitatifs, représentés sur les figures 1 à 8, dans lesquelles:
- la figure 1 représente un tronçon de fuselage en perspective selon l'art antérieur ;
- la figure 2 relative également à l'art antérieur montre un exemple de raidisseur longitudinal en perspective et la position du plan rectifiant sur ce raidisseur ;
- la figure 3 illustre en perspective la trace des raidisseurs à la surface du panneau selon l'art antérieur ;
- la figure 4 est une vue schématique du principe de raidissement d'un tronçon de fuselage selon l'art antérieur ;
- la figure 5 est une vue schématique du principe de raidissement d'un tronçon de fuselage selon un mode de réalisation de l'invention ;
- la figure 6 illustre en vue de dessus en perspective un mode de réalisation des raidisseurs à la surface d'un panneau ;
- la figure 7 est une vue en perspective en bout d'un panneau selon un mode de réalisation en matériau composite montrant la superposition des plis ;
- la figure 8 est une vue en bout et en coupe d'un panneau composite selon un mode de réalisation de l'invention par recouvrement de plis interrompus et plis de renfort intermédiaires.

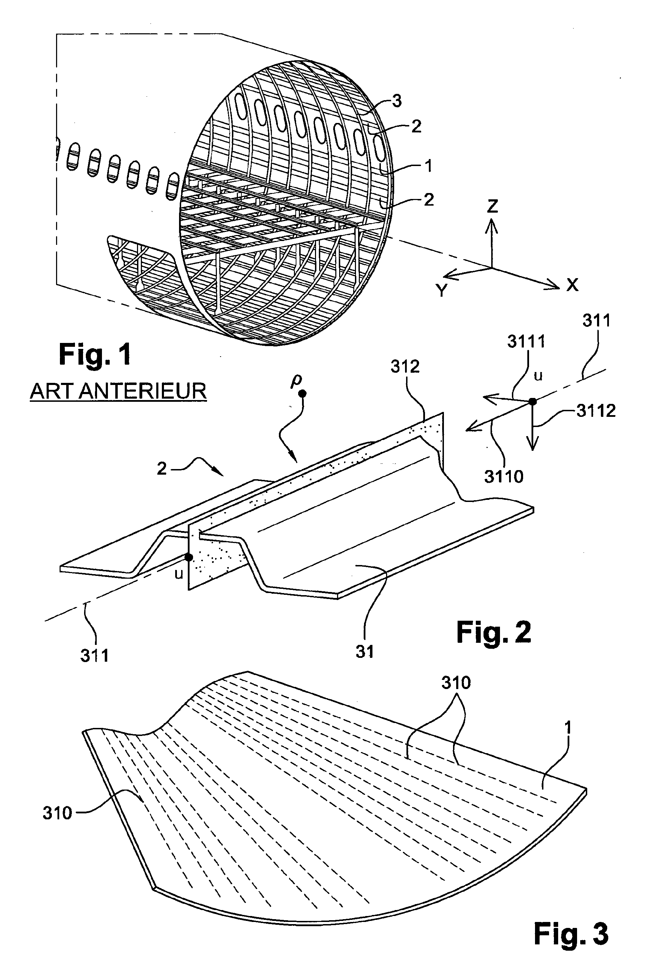

Figure 1, selon l'art antérieur, un tronçon de fuselage d'aéronef est constitué d'une peau (1) constituée d'une feuille en métal ou en matériau composite. Ladite peau est raidie par des raidisseurs longitudinaux (2), également appelés lisses, sous forme de profilés s'étendant sensiblement parallèlement à l'axe longitudinal X du fuselage et des raidisseurs circonférentiels (3), également désignés sous le nom de cadres, s'étendant en suivant la peau dans des sections perpendiculaires à l'axe longitudinal X. L'assemblage d'une peau (1) avec des raidisseurs (2, 3) constitue un panneau raidi (10).

Figure 2, un raidisseur longitudinal (2) se présente sous la forme d'un profilé de section sensiblement constante, mais qui peut être renforcée localement, ladite section étant couramment en forme d'un '2' ou d'un Té lorsque ledit profilé est constitué d'un matériau métallique ou de la forme d'un Té ou d'un oméga lorsqu'il est constitué d'un matériau composite. Ce profilé est, selon l'art antérieur, fabriqué selon une forme rectiligne et rapporté sur le panneau. Lors de cet assemblage, ou préalablement à celui-ci, ledit raidisseur peut subir une mise en forme par étirage, roulage, estampage local ou grenaillage, s'il est métallique, par estampage à chaud ou lors de la cocuisson ou du collage avec le panneau s'il est constitué d'un matériau composite, laquelle mise en forme est destinée à adapter sa forme à la surface d'appui sur la peau, le raidisseur étant lié à celle-ci par sa semelle (31). La forme générale dudit raidisseur peut être décrite après formage par la courbe (311) reliant le long dudit raidisseur les centres d'inertie de ses sections. Lorsqu'il est de section constante, cette courbe est une droite pour le raidisseur avant formage, elle devient courbe après formage. En chaque point de cette courbe, on peut définir un repère dit de Frenet, qui comprend la tangente (3110) à la courbe (311) en ce point 'u' et la normale principale (3111) à la courbe en ce même point. La tangente et la normale principale définissent un plan particulier, dit osculateur, de la courbe au point 'u' considéré et la binormale (3112) perpendiculaire aux deux autres, laquelle est, de fait, dirigée vers la semelle du raidisseur (31) et donc la peau (1) du panneau raidi. Le plan formé en chaque point 'u' de la courbe (311) par la tangente (3110) et la binormale (3112) est dénommé plan rectifiant (312).

La mise en forme de la lisse (2) consiste, selon l'art antérieur, à lui conférer une courbure selon un rayon p sensiblement parallèle à la binormale (3112) et le cas échéant un vrillage par torsion autour de l'axe principal (311) de sorte qu'elle suive la forme du panneau.

Figure 3, sur un panneau raidi (10), la trace des raidisseurs (310), par exemple dans le cas des raidisseurs longitudinaux (2), est définie par l'intersection entre le plan rectifiant des lisses et la surface, interne ou externe, de la peau (1). Selon l'art antérieur, d'une de leurs extrémités à l'autre, les lisses suivent une trace géodésique (310) à la surface de la peau (1). C'est-à-dire que l'opération de mise en forme éventuelle leur confère une courbure et une torsion égales à la courbure du panneau (10) entre ces deux points d'extrémités. Vis-à-vis de la surface de la peau (1) la trace d'un tel raidisseur suit une trajectoire à courbure géodésique nulle, c'est-à-dire une courbe géodésique. Si le panneau est en simple courbure, les traces sont des droites. Selon l'art antérieur il en va de même pour les cadres (3), dont les traces à la surface de la peau (1) suivent également sensiblement des courbes géodésiques entre leurs extrémités, et qui, si le panneau est en simple courbure, suivent des cercles ou des ellipses, dans un plan YZ du fuselage.

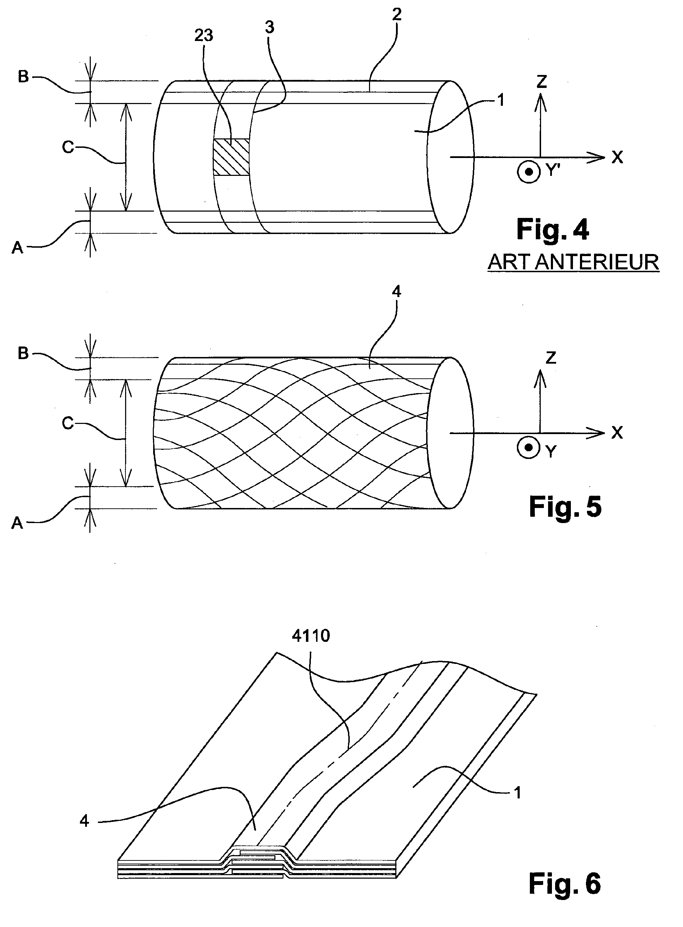

Figure 4, le mode de placement des raidisseurs selon l'art antérieur, produit dans le fuselage un renforcement selon des mailles (23) sensiblement rectangulaires. Ces mailles reprennent des flux d'effort de natures différentes selon leur position. Ainsi, en vol, la partie inférieure du fuselage (A) est soumise essentiellement à une compression selon l'axe longitudinal X du fuselage, laquelle compression est portée essentiellement par les lisses (2). La partie supérieure (B) est sollicitée essentiellement en traction laquelle traction est également portée par les lisses (2). Dans la partie intermédiaire (C) la sollicitation est une sollicitation de cisaillement reprise conjointement par les lisses (2) et les cadres (3).

Figure 5, selon un mode de réalisation de l'invention, les raidisseurs (4) ne sont plus disposés selon des traces géodésiques, mais sont orientés localement de manière optimale par rapport au flux d'effort. Ainsi, en partie inférieure du fuselage (A) et en partie supérieure (B) ils sont orientés sensiblement parallèles à l'axe longitudinal X du fuselage de sorte à opposer le maximum de raidissement vis-à-vis des sollicitations de traction/compression. Leur orientation se rapproche progressivement d'une orientation à 45° en se rapprochant du centre du fuselage dans la zone intermédiaire (C), de sorte à opposer le maximum de raidissement vis-à-vis des sollicitations de cisaillement. Avec ce mode de raidissement optimisé, la sollicitation des cadres devient faible et ceux-ci peuvent être considérablement réduits en section, donc en masse.

Figure 6, selon ce mode de réalisation, le raidisseur (4) ne suit plus à la surface de la peau (1) une géodésique entre ses deux extrémités mais une trace (4110) à courbure géodésique non nulle. Ce mode de réalisation est plus particulièrement adapté aux panneaux raidis (10) constitués d'un matériau composite.

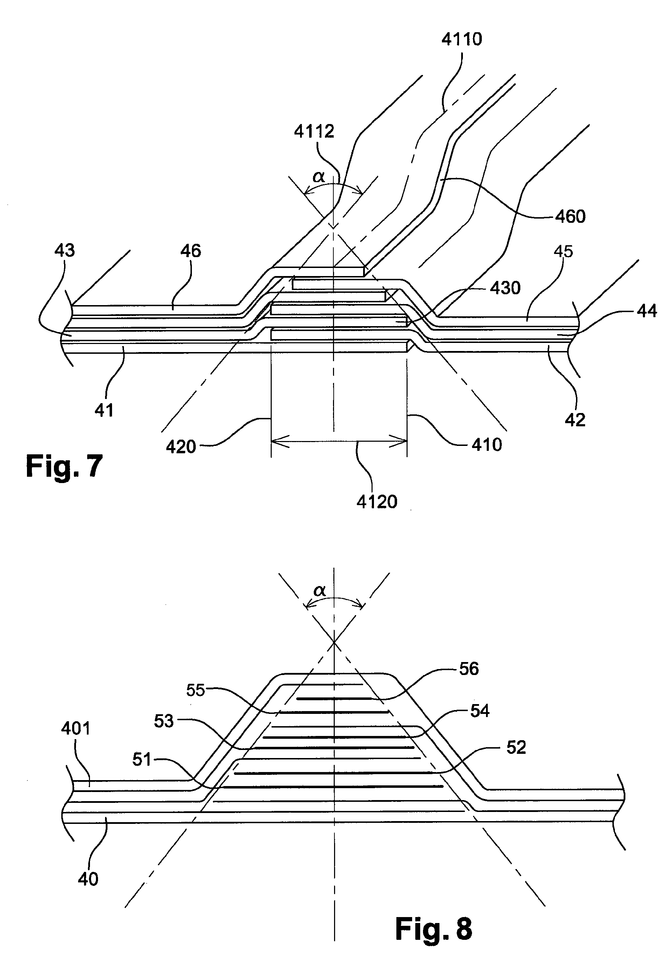

Figure 7, selon ce mode de réalisation en matériau composite, les raidisseurs courbes (4) peuvent être formés lors du drapage du panneau par superposition locale de plis, en drapage automatique sur machine à commande numérique. Une préforme du panneau est alors fabriquée par le drapage successif de nappes de fibres sèches ou pré-imprégnées unidirectionnelles ou tissées selon une séquence de dépose et une orientation prédéfinies. Alternativement, ou localement pour des contours de raidisseurs complexes, les fibres peuvent être déposées par placement de fibres.

La préforme est ensuite cuite ou consolidée sous pression dans les cas respectifs de fibres pré-imprégnées de résine thermodurcissable ou de résine thermoplastique, ou suit un processus de moulage avec injection de résine dans le cas d'une préforme sèche, selon des procédés classiques connus de l'homme du métier.

Selon ce mode de drapage, un premier pli (41) est drapé, son bord (410) suivant un contour parallèle à la trace (4110) désirée, laquelle a été déterminée par calcul, par exemple, en fonction du flux d'effort auquel est soumis le panneau en service. Un deuxième pli (42) est drapé de sorte que son bord (420) recouvre le bord (410) du premier pli (41) sur une longueur de recouvrement (4120) sensiblement centrée sur la trace (4110) du raidisseur. Un troisième pli (43) est drapé sur le premier (41) de sorte que son bord (430) recouvre le bord (420) du deuxième pli (42). Un quatrième pli (44) dont le bord vient recouvrir le bord (430) du troisième pli et ainsi de suite de sorte que les recouvrements successifs créent une surépaisseur qui forme le raidisseur. La longueur des recouvrements successifs, toujours centrée sur la trace (4110) du raidisseur, diminue à chaque superposition de sorte que les bords des plis successifs sont décalés selon une pente d'angle α/2 par rapport à la binormale (4112) à la trace du raidisseur. Avantageusement, α est compris entre 20° et 60°. Ces angles permettent un transfert progressif des charges entre les plis superposés et évitent ainsi un mode d'endommagement par délaminage des parties de plis superposés.

Avantageusement également, la distance minimale de recouvrement entre deux plis est de 15 mm.

Pour éviter des endommagements par pelage des plis externes interrompus (46, 41) il est avantageux de recouvrir les deux faces du panneau par des plis continus.

Figure 8, le panneau est ainsi recouvert sur chacune de ces faces par des plis continus (40, 401). De plus, selon un mode de réalisation particulier, des plis de renfort interne (51, 52, 53, 54, 55, 56) sont placés entre les recouvrements. Ces plis de largeur réduite sont avantageusement déposés par placement de fibres. Ils permettent d'apporter un surcroît d'inertie au raidisseur lorsque le nombre de plis nécessaire à la peau n'est pas suffisant pour atteindre cette inertie par simple recouvrement.

Avantageusement les plis de renfort internes ont une largeur d'au moins 10 mm et doivent être entièrement recouverts par les recouvrements des plis interrompus (41, 42, 43, 44, 45, 46). Au maximum 5 plis de renfort internes peuvent être placés entre le recouvrement de deux plis interrompus.

Selon un mode de réalisation particulier (non représenté) un même panneau peut comporter des raidisseurs formés par recouvrement de plis sur chacune de ses faces. Selon un autre mode de réalisation particulier (non représenté) un même panneau peut comporter à la fois des raidisseurs formés par superposition de plis et des raidisseurs rapportés.

La description ci-avant illustre clairement que par ses différentes caractéristiques et leurs avantages, la présente invention atteint les objectifs qu'elle s'était fixés. En particulier, elle permet d'optimiser la raideur et la résistance du panneau au flux d'effort auxquels il est soumis en service en minimisant sa masse par une définition optimale de l'orientation des raidisseurs par rapport audit flux d'effort.

## Revendications

1. Panneau raidi (10), constitué d'un matériau composite à renfort fibreux et comprenant au moins un raidisseur (4 ), dit longitudinal, s'étendant sensiblement d'une extrémité à l'autre du panneau et dont la trace (4110) suit sur la surface de la peau (1) dudit panneau une trajectoire à courbure géodésique non nulle entre les deux extrémités dudit raidisseur, **caractérisé en ce que** ledit raidisseur (4) est constitué par la superposition locale de plis (41, 42, 43,44, 45, 46), réalisée par le recouvrement de bords de plis prédécoupés lors du drapage du panneau.

2. Panneau raidi (10) selon la revendication 1, **caractérisé en ce que** sa forme est en double courbure au moins une courbure étant non nulle.

3. Panneau raidi (10) selon la revendication 1, **caractérisé en ce qu'**il comprend un raidisseur longitudinal (4) sur chacune de ses faces.

4. Panneau raidi (10) selon la revendication 1, **caractérisé en ce qu'**il comprend un pli continu (401, 40) sur sa face interne et un pli continu sur sa face externe du panneau.

5. Panneau raidi (10) selon la revendication 4, **caractérisé en ce que** le raidisseur (4) est constitué par recouvrement des bords de plis lors du drapage avec au moins un pli intercalaire (51, 52, 53, 54, 55, 56) entre les bords en recouvrement.

6. Aéronef comprenant un fuselage d'axe longitudinal (X) dans lequel un tronçon est sollicité en vol selon une sollicitation de compression dans une zone dite inférieure (A) et en traction dans une zone dite supérieure (B) sensiblement symétrique de la zone inférieure (A) par rapport à l'axe longitudinal (X) et comportant une zone intermédiaire (C) comprise entre la zone inférieure et la zone supérieure sollicitée en cisaillement, **caractérisé en ce qu'**il comprend un panneau raidi (10) selon l'une quelconque des revendications précédentes.

7. Aéronef selon la revendication 6, **caractérisé en ce que** ledit panneau raidi (10) comprend un raidisseur longitudinal (4) qui à la surface de la peau (1) dudit panneau (10) suit une trajectoire telle que, orientée sensiblement parallèle à l'axe longitudinal (X) du fuselage en partie inférieure (A) et en partie supérieure (B) dudit fuselage, de sorte à opposer le maximum de raidissement vis-à-vis des sollicitations de traction/compression, son orientation évolue progressivement vers une orientation à 45° en se rapprochant de la zone intermédiaire (C) du fuselage, de sorte à opposer le maximum de raidissement vis-à-vis des sollicitations de cisaillement.

## Patentansprüche

1. Versteiftes Paneel (10), das aus einem Verbundmaterial mit Faserverstärkung hergestellt ist und mindestens eine, längsgerichtet genannte, Aussteifung (4) umfasst, die sich im Wesentlichen von dem einen zu dem anderen Ende des Paneels erstreckt, und dessen Spurgerade (4110) auf der Oberfläche der Außenschicht (1) des Paneels einer Trajektorie mit einer von Null abweichenden geodätischen Krümmung zwischen den beiden Enden der Aussteifung folgt, **dadurch gekennzeichnet, dass** die Aussteifung (4) aus örtlichem Übereinanderlegen von Lagen (41, 42, 43, 44, 45, 56) hergestellt ist, das durch die Überlappung von Rändern der zuvor geschnittenen Lagen während der Streckformung des Paneels realisiert wird.

2. Versteiftes Paneel (10) nach Anspruch 1, **dadurch gekennzeichnet, dass** seine Form in Doppelkrümmung wenigstens eine Krümmung ist, die von Null abweicht.

3. Versteiftes Paneel (10) nach Anspruch 1, **dadurch gekennzeichnet, dass** es eine längsgerichtete Aussteifung (4) auf jeder seiner Oberflächen umfasst.

4. Versteiftes Paneel (10) nach Anspruch 1, **dadurch gekennzeichnet, dass** es eine durchgehende Lage (401, 40) auf seiner Innenseite und eine durchgehende Lage auf seiner Außenseite des Paneels umfasst.

5. Versteiftes Paneel (10) nach Anspruch 4, **dadurch gekennzeichnet, dass** die Aussteifung (4) aus überlappenden Rändern der Lagen während der Streckformung mit mindestens einer dazwischenliegenden Lage (51, 52, 53, 54, 55, 56) zwischen den sich überlappenden Rändern hergestellt wird.

6. Flugzeug, einen Flugzeugrumpf mit einer Längsachse (X) umfassend, in der ein Abschnitt beim Flug entsprechend einer Kompressionsbeanspruchung in einem sogenannten unteren (A) Bereich und beim Ziehen in einem sogenannten oberen (B) Bereich im Wesentlichen symmetrisch zu dem unteren Bereich (A) im Verhältnis zur Längsachse X beansprucht wird, und einen zwischen dem unteren Bereich und dem oberen Bereich liegenden Mittelbereich (C) umfassend, der Scherbeanspruchung unterliegt, **dadurch gekennzeichnet, dass** es ein versteiftes Paneel (10) nach irgendeinem der vorhergehenden Ansprüche umfasst.

7. Flugzeug nach Anspruch 6, **dadurch gekennzeichnet, dass** das versteifte Paneel (10) eine längsgerichtete Aussteifung (4) umfasst, die auf der Oberfläche der Außenschicht (1) des Paneels (10) einer Trajektorie dergestalt folgt, die im Wesentlichen parallel zur Längsachse (X) des Rumpfs im unteren Teil (A) und im oberen Teil (B) des Rumpfs, dergestalt ausgerichtet ist, dass die maximale Aussteifung im Verhältnis z u Zug-/Druckbeanspruchungen ihre Ausrichtung stufenweise zu einer 45 ° Ausrichtung ändert, und sich dem Zwischenbereich (C) des Rumpfes dergestalt annähert, dass die maximale Aussteifung den Scherbeanspruchungen entgegenwirkt.

## Claims

1. Stiffened panel (10) consisting of a composite material with fibrous reinforcements and comprising at least one stiffener (4), termed the longitudinal stiffener, extending substantially from one end of the panel to the other, and whose trace (4110) follows, on the surface of the skin (1) of said panel, a trajectory having a non-zero geodesic curvature between the two ends of said stiffener, **characterized in that** said stiffener (4) is formed by the local superposition of plies (41, 42, 43, 44, 45, 46), effected by covering edges of plies which are pre-cut when laying-up the panel.

2. Stiffened panel (10) according to Claim 1, **characterized in that** its shape is doubly curved, at least one curvature being non-zero.

3. Stiffened panel (10) according to Claim 1, **characterized in that** it comprises a longitudinal stiffener (4) on each one of its faces.

4. Stiffened panel (10) according to Claim 1, **characterized in that** it comprises a continuous ply (401, 40) on its internal face and a continuous ply on its external face of the panel.

5. Stiffened panel (10) according to Claim 4, **characterized in that** the stiffener (4) is formed by covering the ply edges when laying-up with at least one interposed ply (51, 52, 53, 54, 55, 56) between the covering edges.

6. Aircraft comprising a fuselage of longitudinal axis (X) in which, in flight, one section is loaded in compression in a 'lower' region (A) and in tension in an 'upper' region (B) which is substantially symmetric with the lower region (A) with respect to the longitudinal axis (X), and comprising an intermediate region (C) between the lower region and the upper region which is loaded in shear, **characterized in that** it comprises a stiffened panel (10) according to any one of the preceding claims.

7. Aircraft according to Claim 6, **characterized in that** said stiffened panel (10) comprises a longitudinal stiffener (4) which, at the surface of the skin (1) of said panel (10), follows a trajectory such that, oriented substantially parallel to the longitudinal axis (X) of the fuselage in the lower portion (A) and in the upper portion (B) of said fuselage, so as to present maximum stiffening against the tensile/compressive loads, its orientation changes progressively to an orientation at 45° while approaching the intermediate region (C) of the fuselage, so as to present maximum stiffening against the shear loads.
